# FASCICULE DE BREVET EUROPEEN

(11) **EP 0 642 647 B1**
(45) Date de publication et mention de la délivrance du brevet: **22.07.1998**
(21) Numéro de dépôt: 94911221.3
(22) Date de dépôt: 25.03.1994
(51) Int. Cl.: F23J 15/00

(54) **PROCEDE DE TRAITEMENT DES GAZ CHAUDS ET POLLUES ISSUS D'UN REACTEUR THERMIQUE INCLUANT UNE COMBUSTION**
VERFAHREN ZUR BEHANDLUNG VON HEISSEN UND VERUNREINIGTEN ABGASEN AUS EINEM THERMISCHEN REAKTOR MIT EINER VERBRENNUNG
PROCESS FOR THE TREATMENT OF HOT AND POLLUTED GAS ISSUED FROM A THERMAL REACTOR INCLUDING A COMBUSTION

(30) Priorité: 25.03.1993 FR 9303427
(43) Date de publication de la demande: 15.03.1995
(73) Titulaire: GAZ DE FRANCE, 75017 Paris (FR)
(72) Inventeur: GUILLET, Rémi, F-93380 Pierrefitte (FR)
(74) Mandataire: Thévenet, Jean-Bruno
(86) Numéro de dépôt international: FR9400334
(87) Numéro de publication internationale: WO9421968

(56) Documents cités:
- DE-A- 3 916 705
- FR-A- 2 324 991
- FR-A- 2 431 660
- FR-A- 2 605 720
- FR-A- 2 678 047
- PATENT ABSTRACTS OF JAPAN vol. 10, no. 320 (M-530) (2376) 30 Octobre 1986 & JP,A,61 128 021 (NOBUO ISHIMOTO) 16 Juin 1986

## Description

La présente invention a pour objet un procédé de traitement des gaz chauds et pollués issus d'un réacteur thermique incluant une combustion, qui est applicable notamment à un réacteur de traitement des déchets.

Dans le cadre des procédés de traitement de gaz chauds tels que ceux issus de procédés industriels, notamment dans le cadre de procédés de traitement de déchets, les préoccupations grandissantes relatives à la protection de l'environnement ont amené les techniciens à améliorer les performances écologiques.

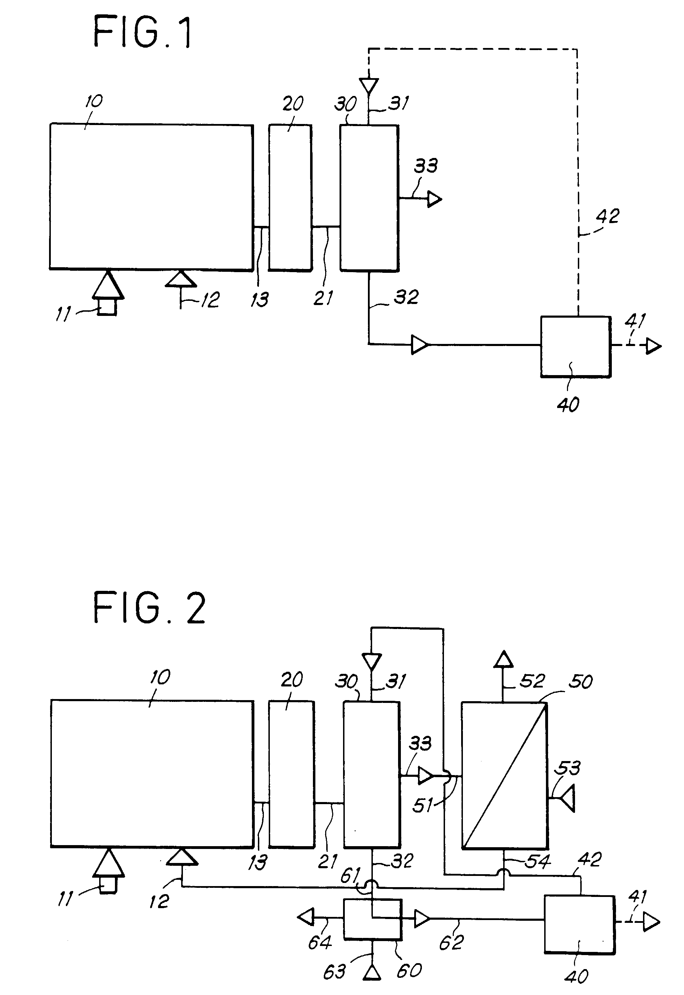

Les gaz de combustion chauds et pollués 13 issus d'un réacteur thermique 10 représenté schématiquement sur la figure 1, tel qu'un réacteur classique utilisant de l'air de combustion 12 introduit à partir de l'atmosphère ambiante pour traiter des déchets 11, sont ainsi soumis à une opération de filtrage dans des filtres 20 par exemple de type électrostatique, pour piéger des poussières, puis les gaz chauds filtrés 21 sont eux-mêmes introduits dans un laveur 30 qui peut être constitué par exemple par une tour de lavage au lait de chaux afin de neutraliser les acides avant rejet atmosphérique des effluents gazeux 33. Le lavage peut être effectué en circuit ouvert à partir d'eau 31 qui peut être prélevée dans une rivière par exemple, l'eau 32 issue du laveur 30 étant elle-même traitée dans un dispositif de traitement 40 afin de limiter la pollution de l'eau 41 rejetée vers l'extérieur après l'opération de lavage. En variante, l'eau traitée dans le dispositif de traitement 40 peut être recyclée selon un circuit 42 pour être réintroduite dans le laveur 30 à la place ou en complément de l'eau 31 initialement prélevée à l'extérieur dans une réserve telle qu'une rivière.

Les installations de traitement de gaz chauds telles que celles illustrées schématiquement sur la figure 1 permettent d'obtenir une certaine neutralité au niveau des liquides 41 rejetés et des fumées 33 issues du laveur 30. Ces fumées 33 contiennent cependant une proportion relativement importante d'oxyde d'azote et donnent également naissance à la formation d'un panache de vapeur qui contribue entre autres à défigurer les sites dans lesquels sont installés des réacteurs tels que des réacteurs d'incinération.

On connaît par ailleurs par le document FR-A-2 605 720 une chaudière à condensation comprenant un bloc foyer incorporant un échangeur de chaleur parcouru par un fluide caloporteur, et associé à une pompe à vapeur d'eau comprenant un laveur-condenseur recevant les fumées issues du foyer et un laveur-évaporateur recevant de l'air prélevé dans l'atmosphère.

Le document FR-A-2 324 991 décrit une installation de production d'énergie comprenant une chaudière de type classique à combustible solide-liquide ou gazeux pour la production d'énergie mécanique ou électrique et de grandes quantités d'eau chaude, cette installation incorporant sur le circuit des fumées de combustion un organe de dépoussiérage et un épurateur de fumée de type à lavage par fluide.

La présente invention vise à remédier aux inconvénients précités et à améliorer les performances à la fois écologiques et énergétiques des procédés émetteurs de gaz chauds en permettant le rejet vers l'atmosphère de gaz plus propres à teneur réduite en oxyde d'azote et teneur en vapeur d'eau réduite, tout en assurant une récupération de chaleur supplémentaire qui s'ajoute aux récupérations des échangeurs-récupérateurs qui sont le cas échéant déjà associés directement au réacteur thermique et situés en amont des dispositifs de filtrage et de lavage des gaz chauds et pollués issus du réacteur.

Ces buts sont atteints grâce à un procédé de traitement des gaz chauds et pollués issus d'un réacteur thermique de traitement des déchets incluant une combustion et alimenté en air comburant, selon lequel on procède à un filtrage des gaz chauds issus du réacteur, puis à un lavage des gaz chauds filtrés avant leur renvoi dans l'atmosphère,
caractérisé en ce que l'on procède au lavage des gaz chauds filtrés en les faisant passer dans un étage laveur-condenseur d'une pompe à vapeur d'eau tandis que l'on introduit l'air comburant dans un étage laveur-évaporateur de ladite pompe à vapeur d'eau pour préchauffer et humidifier cet air comburant avant son entrée dans le réacteur thermique de telle sorte que l'on combine ainsi les opérations de lavage des gaz chauds filtrés et d'échange massique et thermique entre les gaz chauds filtrés et lavés et de l'air prélevé dans l'atmosphère, l'enthalpie résiduelle contenue dans les gaz chauds filtrés et lavés étant recyclée sous la forme d'air chaud très humide destiné à constituer au moins une partie dudit air comburant, et les gaz de combustion rejetés dans l'atmosphère étant relativement secs et présentant une température peu supérieure à celle de la température ambiante, et en ce que l'on récupère, en partie basse de l'étage laveur-condenseur de la pompe à vapeur d'eau, de l'eau qui passe dans un échangeur où elle cède une partie de sa chaleur à un circuit externe d'utilisation avant d'être introduite en partie haute de l'étage laveur-évaporateur de la pompe à vapeur d'eau pour assurer le préchauffage et l'humidification de l'air comburant.

On utilise pour l'opération de lavage, de l'eau qui est soumise à un processus de traitement avant son rejet vers l'extérieur.

Avantageusement, on utilise pour l'opération de lavage, de l'eau qui est soumise à un préchauffage avant l'opération de lavage, par échange de chaleur avec de l'eau de lavage ayant déjà servi à une opération de lavage.

De façon plus particulière, selon une mise en oeuvre préférentielle du procédé, on utilise pour l'opération de lavage, de l'eau recyclée qui est soumise à un processus de traitement puis à un préchauffage, par échange de chaleur avec de l'eau de lavage ayant déjà servi à une opération de lavage et ayant déjà donné lieu à une première récupération de chaleur par échange de chaleur avec un réseau de chauffage situé à proximité du réacteur.

L'invention permet ainsi d'améliorer à la fois les performances écologiques et énergétiques d'un procédé émetteur de gaz chauds en récupérant à une température la plus élevée possible la chaleur latente accumulée au moment du lavage et plus particulièrement en permettant l'utilisation de cette chaleur sur un réseau de chauffage par eau chaude situé à proximité du réacteur.

L'invention contribue ainsi à la fois à réduire le taux d'oxydes d'azote contenus dans les rejets gazeux dans l'atmosphère, et la quantité de vapeur d'eau associée à ces rejets atmosphériques de sorte que le panache de vapeur rejetée peut être supprimé ou fortement atténué, et à améliorer le rendement de l'ensemble du processus par la récupération supplémentaire de chaleur sous forme d'eau chaude par échange de chaleur avec l'eau ayant servi à l'opération de lavage.

Selon un mode de réalisation particulier de l'invention, on introduit dans une première enceinte constituant ledit étage laveur-évaporateur l'air prélevé dans l'atmosphère, on procède à une humidification accompagnée de préchauffage dudit air dans ladite première enceinte à l'aide d'eau préchauffée introduite dans ladite première enceinte, on utilise l'air réchauffé et très chargé en vapeur d'eau dans la première enceinte comme air comburant pour le réacteur thermique, on introduit dans une deuxième enceinte constituant ledit étage laveur-condenseur l'eau refroidie ayant servi au lavage de l'air dans la première enceinte, pour constituer l'eau de lavage des gaz chauds filtrés également introduits dans la deuxième enceinte pour être soumis à une opération de lavage et de condensation de la vapeur d'eau contenue dans lesdits gaz chauds filtrés, et on extrait de la deuxième enceinte, d'une part, les gaz de combustion relativement secs qui sont rejetés dans l'atmosphère et, d'autre part, l'eau formée dans la deuxième enceinte qui est elle-même recyclée pour être introduite dans la première enceinte, de sorte que les opérations de lavage des gaz chauds filtrés et d'échange massique et thermique entre les gaz chauds filtrés et l'air prélevé dans l'atmosphère sont combinées par la réalisation d'une opération de lavage-évaporation appliquée dans la première enceinte à l'air prélevé dans l'atmosphère et d'une opération de lavage-condensation appliquée dans la deuxième enceinte aux gaz de combustion filtrés.

La double fonction de l'enceinte de l'étage de lavage-condensation, qui contribue la fois à la neutralisation des gaz chauds et pollués et à la réalisation d'une récupération de chaleur, permet également d'améliorer l'ensemble des performances écologiques et énergétiques avec réduction sensible de l'encombrement de l'installation.

A titre d'exemple, le procédé selon l'invention peut être mis en oeuvre dans des conditions telles que les gaz chauds filtrés soumis à l'opération de lavage présentent une température de l'ordre de 200 à 300°C, que l'air prélevé dans l'atmosphère présente une température de l'ordre de 15 à 25°C, que l'eau servant à l'opération de lavage est introduite à une température de l'ordre de 45 à 55°C et que l'eau ayant servi à l'opération de lavage est évacuée à une température de l'ordre de 65 à 75°C permettant une récupération de chaleur par échange de chaleur avec un réseau de chauffage situé à proximité du réacteur.

D'autres caractéristiques et avantages de l'invention ressortiront de la description détaillée de modes particuliers de réalisation, donnés à titre d'exemples non limitatifs, en référence aux dessins annexés, sur lesquels :
- La figure 1 représente le schéma synoptique d'un réacteur thermique classique de traitement de déchets, et
- les figures 2, 3 et 4 représentent les schémas synoptiques d'un réacteur thermique muni d'un équipement permettant la mise en oeuvre d'un procédé de traitement de gaz chauds et pollués selon différents modes de réalisation de l'invention.

Si l'on se reporte à la figure 2 on voit un réacteur thermique 10 incluant une combustion qui correspond à un réacteur classique tel que celui représenté avec la même référence sur la figure 1. Le réacteur 10 peut être par exemple un réacteur d'incinération de déchets urbains 11. L'air comburant 12 appliqué au réacteur 10 n'est toutefois pas constitué directement par de l'air atmosphérique relativement frais et sec, comme dans le cas du réacteur de la figure 1, mais est constitué en tout ou partie par de l'air chaud et très chargé en vapeur d'eau issu d'un échangeur massique et thermique 50 dans lequel est introduit de l'air atmosphérique 53.

Des échangeurs-récupérateurs de chaleur, non représentés, peuvent être associés directement au réacteur 10. Les gaz chauds et pollués 13, dont la température peut être comprise par exemple entre 200 et 300°C, sont introduits dans un ou plusieurs filtres 20 qui peuvent être tout-à-fait analogues aux filtres 20 de la figure 1.

Les gaz chauds filtrés 21 sont eux-mêmes introduits dans un laveur 30 qui, dans le mode de réalisation de la figure 2, peut être analogue à un dispositif de lavage 30 mis en oeuvre dans une installation classique telle que celle de la figure 1, mais assure la mise en oeuvre d'une opération de lavage dans laquelle les températures d'entrée et de sortie de l'eau de lavage sont sensiblement supérieures à celle du courant d'eau de lavage 31 entrant dans le laveur 30 de la figure 1 et à celle du courant d'eau de lavage 32 sortant du laveur 30 de la figure 1 tandis que le phénomène de condensation est accentué. Un échangeur-récupérateur de chaleur 60 assurant un transfert de chaleur entre l'eau 32 issue du laveur 30 et de l'eau 63, 64 d'un réseau de chauffage situé à proximité du réacteur 10 est alors associé au laveur 30. L'eau de lavage 62 sortant de l'échangeur 60 se trouve ainsi à une température plus réduite que celle de l'eau de lavage 61 entrant dans l'échangeur 60, et qui correspond à l'eau 32 évacuée du laveur 30. L'eau 64 du réseau de chauffage annexe, qui sort de l'échangeur 60 est elle-même réchauffée par rapport à l'eau 63 de ce même réseau entrant dans l'échangeur 60.

L'eau de lavage 62 issue de l'échangeur 60 est elle-même introduite dans un dispositif 40 de traitement rapide de l'eau, qui est adiatique et isotherme. L'eau issue du dispositif de traitement 40 dont le caractère acide est neutralisé, peut alors être rejetée partiellement ou complètement vers l'extérieur sous la forme d'un flux 41. Un courant d'eau 42 issu du dispositif de traitement 40 peut donc être recyclé pour constituer l'eau de lavage 31 introduite dans le laveur 30.

Les gaz chauds 33 partiellement refroidis et dépollués dans le laveur 30 sont appliqués sous la forme d'un flux d'entrée 51 à un échangeur massique et thermique 50, qui peut encore être dénommé pompe à vapeur d'eau, au sein duquel s'effectue un recyclage de l'enthalpie résiduelle des gaz sortant du laveur 30, avant rejet dans une cheminée ou directement vers l'atmosphère sous la forme des gaz 52 relativement secs et fortement refroidis. Le recyclage des chaleurs sensible et latente résiduelles contenues dans les gaz issus du laveur-condenseur 30 s'effectue conformément à l'invention en utilisant le vecteur air comburant qui est préchauffé et humidifié lors de son passage dans l'échangeur massique et thermique 50. De l'air atmosphérique 53 relativement frais et sec est ainsi introduit dans l'échangeur massique et thermique 50 et de l'air 54 relativement chaud et très chargé en vapeur d'eau est issu de l'échangeur massique et thermique 50 pour constituer tout ou partie de l'air comburant 12 introduit dans le réacteur 10.

L'utilisation dans le réacteur 10, en tant qu'air comburant 12, d'un flux d'air chaud et très chargé en vapeur d'eau contribue de façon naturelle à réduire la formation d'imbrûlés et à réduire la proportion d'oxydes d'azote dans les gaz chauds et pollués 13 issus du réacteur 10.

L'échangeur massique et thermique 50 assure un transfert simultané de chaleur et d'éléments condensables entre les gaz 51 issus du laveur 30, qui sont relativement chauds et contiennent de la vapeur d'eau, et l'air atmosphérique 53, dont la température est inférieure à la température de rosée des gaz 51. Cet échangeur massique et thermique 50 peut présenter diverses configurations qui sont connues en soi.

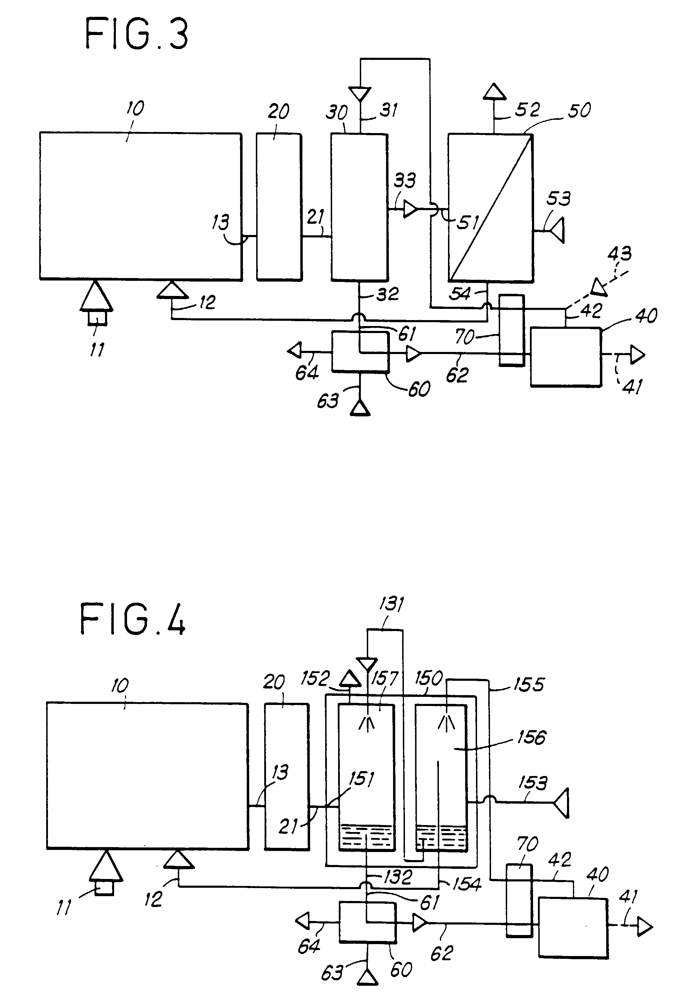

L'installation représentée sur la figure 3 permet de mettre en oeuvre le procédé selon l'invention d'une façon améliorée par le fait qu'un préchauffeur d'eau de lavage 70 est associé au dispositif 40 de traitement de l'eau. Le préchauffeur 70 est constitué par un échangeur de chaleur entre l'eau de lavage 62 présente en sortie de l'échangeur 60 et l'eau de lavage 31 introduite dans le laveur 30, cette eau 31 pouvant être constituée par l'eau 42 issue du dispositif 40 de traitement de l'eau et destinée à être recyclée vers le laveur 30. De la sorte, la chaleur résiduelle encore contenue dans l'eau de lavage après lavage en sortie de l'échangeur 60, avant introduction dans le dispositif 40 de traitement de l'eau n'est pas perdue mais contribue à accroître les échanges de chaleur au sein du laveur-condenseur 30. On notera également que le préchauffeur 70 est particulièrement utile dans le cas où l'eau 31 introduite dans le laveur 30 est fournie à partir d'une source extérieure 43 relativement froide (représentée en pointillés sur la figure 3) plutôt que sous la forme d'eau recyclée 42, dans le cas d'une mise en oeuvre de l'invention où toute l'eau 62 introduite dans le dispositif 40 de traitement de l'eau est prévue pour être rejetée vers l'extérieur sous la forme d'un flux 41.

La figure 4 présente un mode particulier de réalisation de l'invention dans lequel l'opération de lavage des gaz chauds filtrés 21 est combinée avec l'échange massique et thermique entre les gaz chauds filtrés et lavés et l'air 153 prélevé dans l'atmosphère. Dans ce cas, il n'existe pas de laveur 30 fonctionnant de façon indépendante d'un échangeur massique et thermique 50 comme dans le cas des modes de réalisation des figures 2 et 3, mais c'est l'échangeur massique et thermique 150 lui-même qui est conçu pour assurer l'opération de lavage en plus de sa fonction propre d'échange énergétique, ce qui contribue à mettre en oeuvre le procédé selon l'invention avec une installation plus compacte.

Dans le cas de la figure 4, on introduit dans une première enceinte 156 de l'échangeur 150 l'air 153 prélevé dans l'atmosphère et on procède à un lavage dudit air 153 dans cette première enceinte 156 à l'aide d'eau préchauffée 155 également introduite dans cette première enceinte 156 à partir d'un dispositif de traitement d'eau 40 et d'un préchauffeur 70 qui peuvent être semblables aux dispositifs correspondants décrits en référence à la figure 3. L'air 154 réchauffé et très chargé en vapeur d'eau dans la première enceinte 156 est utilisé comme air comburant 154 constituant tout ou partie du flux d'air 12 introduit dans le réacteur thermique 10.

L'eau refroidie 131 ayant servi au lavage de l'air dans la première enceinte 156 est introduite dans une deuxième enceinte 157 pour constituer l'eau de lavage des gaz chauds filtrés 21 également introduits dans la deuxième enceinte 157 sous la forme d'un flux 151 pour être soumis à une opération de lavage et de condensation de la vapeur d'eau contenue dans ces gaz chauds filtrés. Il est extrait de la deuxième enceinte 157 d'une part les gaz de combustion relativement secs 152 qui sont rejetés dans l'atmosphère et d'autre part l'eau 132 formée dans la deuxième enceinte 157 qui est elle-même recyclée à travers l'échangeur-récupérateur 60, le préchauffeur 70 le dispositif 40 de traitement de l'eau et à nouveau le préchauffeur 70 pour être introduite sous la forme du flux 155 dans la première enceinte 156. De la sorte, les opérations de lavage des gaz chauds filtrés 21 et d'échange massique et thermique entre les gaz chauds filtrés 21 et l'air 153 prélevé dans l'atmosphère sont combinées par la réalisation d'une opération de lavage-évaporation appliquée dans la première enceinte 156 à l'air 153 prélevé dans l'atmosphère et d'une opération de lavage-condensation appliquée dans la deuxième enceinte 157 aux gaz de combustion filtrés 21.

A titre d'exemple, on donnera ci-dessous des exemples typiques de température des différents fluides intervenant dans la mise en oeuvre des procédés de traitement de gaz chauds et pollués dans les différentes installations des figures 1 à 4.

Dans le cas de la figure 1, pour de l'air comburant 12 introduit à une température de l'ordre de 20°C dans le réacteur 10 et des gaz filtrés 21 possédant une température de 230°C, les gaz 33 rejetés dans l'atmosphère présentent une température qui peut être par exemple de 68°C avec de l'eau de lavage 31 introduite à une température de l'ordre de 10°C et de l'eau 32 en sortie du laveur 30 dont la température est de l'ordre de 45°C.

On observe que dans de telles conditions de fonctionnement d'une installation de traitement de gaz connue, l'eau 32 se trouve en sortie du laveur 30 à une température trop faible pour permettre une récupération d'énergie à l'aide d'un échangeur-récupérateur tel que l'échangeur 60 des figures 2 à 4. Par ailleurs, l'introduction d'air de combustion 12 à une température relativement faible ne permet pas d'éliminer même partiellement les oxydes d'azote contenus dans les gaz issus du réacteur 10. Enfin, les gaz 33 rejetés vers l'atmosphère comprennent une proportion de vapeur qui tend à créer un panache blanc susceptible de défigurer un site notamment dans le cas de réacteurs 10 installés en milieu urbain, et la température élevée des gaz 33 se traduit par une perte d'énergie pour l'ensemble de l'installation.

Pour permettre une comparaison avec l'installation de la figure 1, on considére dans l'installation de la figure 2 une entrée d'air atmosphérique 53 à une température de l'ordre de 20°C. Dans ce cas, l'air comburant 12 préchauffé et très humide est porté par exemple à une température de 48°C, ce qui permet d'assurer une meilleure combustion et également de réduire la quantité d'oxydes d'azote contenus dans les gaz 21 issus du filtre 20, qui peuvent présenter une température également par exemple de 230°C. La mise en oeuvre de l'invention permet de réduire à par exemple 57°C la température des gaz 33 en sortie du laveur 30 et à par exemple 40°C la température des gaz 52 en sortie de l'échangeur massique et thermique 50. L'eau 31 introduite dans le laveur 30 peut elle-même dans ce cas présenter une température de par exemple 52°C, ce qui conduit à une température de par exemple 68°C pour l'eau 32 en sortie du laveur 30. Une telle température permet de mettre en oeuvre de façon utile et satisfaisante un échangeur-récupérateur 60 pour lequel du côté du réseau de chauffage, l'eau peut entrer sous la forme d'un flux à environ 30°C et sortir sous la forme d'un flux 64 à environ 65°C, ce qui constitue des températues tout-à-fait convenables pour un réseau de chauffage par circulation d'eau. Dans ces conditions, l'eau de lavage 32 introduite dans l'échangeur-récupérateur 60 sous la forme d'un flux 61 à 68°C peut être évacuée sous la forme d'un flux 62 qui est introduit dans le dispositif 40 de traitement de l'eau à une température de 54°C et ressort de ce dispositif 40 sous la forme d'un flux 42 à une température proche de 54°C pour constituer l'eau 31 recyclée dans le laveur 30.

L'installation de la figure 3 peut fonctionner avec à titre d'exemple des valeurs de température des différents fluides qui sont du même ordre que dans l'exemple donné en référence à la figure 2. La présence d'un préchauffeur 70 d'eau de lavage permet d'obtenir en entrée du laveur 30 de l'eau 31 à une température par exemple de 52°C ou à une température à peine inférieure même dans le cas où de l'eau n'est pas recyclée mais introduite à partir d'une source extérieure sous la forme d'un flux 43 à relativement faible température, par exemple à 20°C.

Dans l'installation de la figure 4, les flux d'air 153 et 154 peuvent présenter des températures par exemple de 20°C et 48°C qui correspondent à celles des flux d'air 53 et 54 des figures 2 et 3. Les flux de gaz 21 et 152 peuvent présenter des températures par exemple de 230°C et 40°C qui correspondent à celles des flux de gaz 21 et 52 des figures 2 et 3. Les températures des flux d'eau 61, 62 et 63, 64 en entrée et sortie de l'échangeur 60 peuvent également être respectivement de 68°C, 54°C, 50°C et 65°C de la même manière que dans le cas d'un fonctionnement similaire de l'installation des figures 2 et 3. Dans le cas de l'installation de la figure 4, la température de l'eau 131 en entrée du laveur-condenseur 157 se trouve cependant égale à par exemple 35°C, c'est-à-dire un peu inférieure à celle de l'eau 31 à l'entrée du laveur 30 des figures 2 et 3. En revanche, l'eau 155 en entrée du laveur-évaporateur 156 est dans ce cas à une température de par exemple 52°C qui correspond à la température de l'eau de lavage en sortie du préchauffeur 70 et se trouve donc pratiquement à la même température que l'eau 31 introduite dans le laveur 30 des figures 2 et 3.

Les températures données ci-dessus ne constituent cependant que des exemples de mise en oeuvre du procédé selon l'invention et des températures un peu différentes, en particulier dans des plages de valeur de quelques degrés en plus ou en moins sont tout-à-fait envisageables en fonction des applications considérées.

## Revendications

1. Procédé de traitement des gaz chauds et pollués issus d'un réacteur thermique (10) de traitement des déchets incluant une combustion et alimenté en air comburant, selon lequel on procède à un filtrage des gaz chauds issus du réacteur (10), puis à un lavage des gaz chauds filtrés avant leur renvoi dans l'atmosphère,
caractérisé en ce que l'on procède au lavage des gaz chauds filtrés en les faisant passer dans un étage laveur-condenseur (157) d'une pompe à vapeur d'eau tandis que l'on introduit l'air comburant dans un étage laveur-évaporateur (156) de ladite pompe à vapeur d'eau pour préchauffer et humidifier cet air comburant avant son entrée dans le réacteur thermique de telle sorte que l'on combine ainsi les opérations de lavage des gaz chauds filtrés et d'échange massique et thermique entre les gaz chauds filtrés et lavés et de l'air prélevé dans l'atmosphère, l'enthalpie résiduelle contenue dans les gaz chauds filtrés et lavés étant recyclée sous la forme d'air chaud très humide destiné à constituer au moins une partie dudit air comburant, et les gaz de combustion rejetés dans l'atmosphère étant relativement secs et présentant une température peu supérieure à celle de la température ambiante, et en ce que l'on récupère, en partie basse de l'étage laveur-condenseur (157) de la pompe à vapeur d'eau, de l'eau qui passe dans un échangeur (60) où elle cède une partie de sa chaleur à un circuit externe d'utilisation avant d'être introduite en partie haute de l'étage laveur-évaporateur (156) de la pompe à vapeur d'eau pour assurer le préchauffage et l'humidification de l'air comburant.

2. Procédé selon la revendication 1, caractérisé en ce que l'on utilise pour l'opération de lavage, de l'eau qui est soumise à un processus de traitement avant son rejet vers l'extérieur.

3. Procédé selon l'une quelconque des revendications 1 et 2, caractérisé en ce que l'on utilise pour l'opération de lavage, de l'eau qui est soumise à un préchauffage avant l'opération de lavage, par échange de chaleur avec de l'eau de lavage ayant déjà servi à une opération de lavage.

4. Procédé selon les revendications 1 à 3, caractérisé en ce que l'on utilise pour l'opération de lavage, de l'eau recyclée qui est soumise à un processus de traitement puis à un préchauffage, par échange de chaleur avec de l'eau de lavage ayant déjà servi à une opération de lavage et ayant déjà donné lieu à une première récupération de chaleur par échange de chaleur avec un réseau de chauffage situé à proximité du réacteur (10).

5. Procédé selon la revendication 1, caractérisé en ce que l'on introduit dans une première enceinte (156) constituant ledit étage laveur-évaporateur l'air prélevé dans l'atmosphère, on procède à une humidification accompagnée de préchauffage dudit air dans ladite première enceinte (156) à l'aide d'eau préchauffée introduite dans ladite première enceinte (156), on utilise l'air réchauffé et très chargé en vapeur d'eau dans la première enceinte (156) comme air comburant pour le réacteur thermique (10), on introduit dans une deuxième enceinte (157) constituant ledit étage laveur-condenseur l'eau refroidie ayant servi au lavage de l'air dans la première enceinte (156), pour constituer l'eau de lavage des gaz chauds filtrés également introduits dans la deuxième enceinte (157) pour être soumis à une opération de lavage et de condensation de la vapeur d'eau contenue dans lesdits gaz chauds filtrés, et on extrait de la deuxième enceinte (157), d'une part, les gaz de combustion relativement secs qui sont rejetés dans l'atmosphère et, d'autre part, l'eau formée dans la deuxième enceinte (157) qui est elle-même recyclée pour être introduite dans la première enceinte (156), de sorte que les opérations de lavage des gaz chauds filtrés et d'échange massique et thermique entre les gaz chauds filtrés et l'air prélevé dans l'atmosphère sont combinées par la réalisation d'une opération de lavage-évaporation appliquée dans la première enceinte (156) à l'air prélevé dans l'atmosphère et d'une opération de lavage-condensation appliquée dans la deuxième enceinte (157) aux gaz de combustion filtrés.

6. Procédé selon l'une quelconque des revendications 1 à 5, caractérisé en ce que les gaz chauds filtrés soumis à l'opération de lavage présentent une température de l'ordre de 200 à 300°C, en ce que l'air prélevé dans l'atmosphère présente une température de l'ordre de 15 à 25°C, en ce que l'eau servant à l'opération de lavage est introduite à une température de l'ordre de 45 à 55°C et en ce que l'eau ayant servi à l'opération de lavage est évacuée à une température de l'ordre de 65 à 75°C permettant une récupération de chaleur par échange de chaleur avec un réseau de chauffage situé à proximité du réacteur (10).

## Patentansprüche

1. Verfahren zur Behandlung von heißen und verunreinigten Gasen aus einem thermischen Reaktor (10) zur Behandlung von Abfällen, der eine Verbrennung einschließt und mit die Verbrennung bewirkender Luft versorgt wird, wobei gemäß dem Verfahren die heißen, aus dem Reaktor (10) kommenden Gase gefiltert und dann die gefilterten heißen Gase vor dem Ausstoß in die Atmosphäre gewaschen werden, dadurch gekennzeichnet, daß die gefilterten heißen Gase gewaschen werden, indem sie in eine Wasch-Kondensations-Stufe (157) einer Wasserdampfpumpe geleitet werden, während die die Verbrennung bewirkende Luft in eine Wasch-Verdampfungs-Stufe (156) dieser Wasserdampfpumpe geleitet wird, um sie vor ihrem Eintritt in den thermischen Reaktor vorzuwärmen und zu befeuchten, so daß auf diese Weise die Vorgänge des Waschens der gefilterten heißen Gase und des Massen- und Wärmeaustausches zwischen den gefilterten und gewaschenen heißen Gasen und der der Atmosphäre entnommenen Luft kombiniert werden, wobei die in den gefilterten und gewaschenen heißen Gasen enthaltene Rest-Enthalpie in Form von heißer, sehr feuchter Luft wiederverwendet wird, die mindestens einen Teil der die Verbrennung bewirkenden Luft bildet, und wobei die in die Atmosphäre ausgestoßenen Verbrennungsgase verhältnismäßig trocken sind und eine wenig höhere Temperatur als die Umgebungstemperatur aufweisen, und dadurch, daß im unteren Bereich der Wasch-Kondensations-Stufe (157) der Wasserdampfpumpe Wasser gesammelt wird, das in einen Austauscher (60) läuft, wo es einen Teil seiner Wärme an ein externes Verbrauchernetz abgibt, bevor es zum Vorwärmen und zur Befeuchtung der die Verbrennung bewirkenden Luft in den oberen Bereich der Wasch-Verdampfungs-Stufe (156) der Wasserdampfpumpe geleitet wird.

2. Verfahren nach Anspruch 1, dadurch gekennzeichnet, daß für den Waschvorgang Wasser verwendet wird, das einem Behandlungsprozeß unterzogen wird, bevor es nach außen abgeleitet wird.

3. Verfahren nach einem der Ansprüche 1 und 2, dadurch gekennzeichnet, daß für den Waschvorgang Wasser verwendet wird, das vor dem Waschvorgang durch Wärmeaustausch mit Waschwasser, das bereits für einen Waschvorgang genutzt wurde, vorgewärmt wird.

4. Verfahren nach den Ansprüchen 1 bis 3, dadurch gekennzeichnet, daß für den Waschvorgang rückgeführtes Wasser verwendet wird, das einem Behandlungsprozeß unterzogen und dann durch Wärmeaustausch mit Waschwasser, das bereits für einen Waschvorgang genutzt wurde und bereits zu einer ersten Wärmerückgewinnung durch Wärmeaustausch mit einem in der Nähe des Reaktors (10) gelegenen Heiznetz geführt hat, vorgewärmt wird.

5. Verfahren nach Anspruch 1, dadurch gekennzeichnet, daß die der Atmosphäre entnommene Luft in einen ersten Behälter (156) eingeleitet wird, der die Wasch-Verdampfungs-Stufe beinhaltet, daß die Luft in diesem ersten Behälter (156) mit Hilfe von vorgewärmtem Wasser, das in ihn geleitet wird, befeuchtet und vorgewärmt wird, daß die vorgewärmte und stark wasserdampfhaltige Luft in dem ersten Behälter (156) als die Verbrennung bewirkende Luft für den thermischen Reaktor (10) verwendet wird, daß in einen zweiten Behälter (157), der die Wasch-Kondensations-Stufe beinhaltet, das abgekühlte Wasser, das zum Waschen der Luft im ersten Behälter (156) genutzt wurde, als Waschwasser für die gefilterten heißen Gase geleitet wird, die ebenfalls in den zweiten Behälter (157) geleitet werden, um einem Vorgang des Waschens und der Kondensation des in ihnen enthaltenen Wasserdampfes unterzogen zu werden, und daß dem zweiten Behälter (157) zum einen die verhältnismäßig trockenen Verbrennungsgase, die in die Atmosphäre ausgestoßen werden, und zum anderen das im zweiten Behälter (157) gebildete Wasser entzogen werden, welches rückgeführt wird, um in den ersten Behälter (156) geleitet zu werden, so daß die Vorgänge des Waschens der gefilterten heißen Gase und des Massen- und Wärmeaustausches zwischen den gefilterten heißen Gasen und der der Atmosphäre entnommenen Luft durch die Verwirklichung eines Wasch-Verdampfungs-Vorgangs, dem im ersten Behälter (156) die der Atmosphäre entnommenene Luft unterzogen wird, und eines Wasch-Kondensations-Vorgangs, dem im zweiten Behälter (157) die gefilterten Verbrennungsgase unterzogen werden, kombiniert werden.

6. Verfahren nach einem der Ansprüche 1 bis 5, dadurch gekennzeichnet, daß die dem Waschvorgang unterzogenen gefilterten heißen Gase eine Temperatur in der Größenordnung von 200 bis 300°C aufweisen, daß die der Atmosphäre entnommene Luft eine Temperatur in der Größenordnung von 15 bis 25°C aufweist, daß das für den Waschvorgang dienende Wasser mit einer Temperatur in der Größenordnung von 45 bis 55°C eingeleitet wird und daß das Wasser, das für den Waschvorgang genutzt wurde, mit einer Temperatur in der Größenordnung von 65 bis 75°C abgeleitet wird, was eine Wärmerückgewinnung durch Wärmeaustausch mit einem in der Nähe des Reaktors (10) gelegenen Heiznetz gestattet.

## Claims

1. Process for the treatment of hot and polluted gases output by a thermal reactor (10) for the treatment of waste which includes a combustion and is supplied with combustion air, in which the hot gases output by the reactor (10) are filtered and then the filtered hot gases are scrubbed before they are discharged into the atmosphere,
characterized in that the filtered hot gases are scrubbed by making them pass through a scrubber-condenser stage (157) of a water-vapour pump while the combustion air is introduced into a scrubber-evaporator stage (156) of the said water-vapour pump in order to preheat and humidify this combustion air before its entry into the thermal reactor so that the operations of scrubbing the filtered hot gases and of mass and heat exchange between the filtered and scrubbed hot gases and the air taken from the atmosphere are thus combined, the residual enthalpy contained in the filtered and scrubbed hot gases being recycled in the form of very wet hot air intended to constitute at least part of the said combustion air, and the combustion gases discharged into the atmosphere being relatively dry and having a temperature barely greater than that of the ambient temperature, and in that water is collected at the bottom part of the scrubber-condenser stage (157) of the water-vapour pump, this water passing through an exchanger (60) where it gives up some of its heat to an external utilization circuit before being introduced into the top part of the scrubber-evaporator stage (156) of the water-vapour pump in order to preheat and humidify the combustion air.

2. Process according to Claim 1, characterized in that, for the scrubbing operation, water is used which is subjected to a treatment process before its discharge to the outside.

3. Process according to either of Claims 1 and 2, characterized in that, for the scrubbing operation, water is used which is subjected, before the scrubbing operation, to a preheat by heat exchange with scrubbing water which has already served for a scrubbing operation.

4. Process according to Claims 1 to 3, characterized in that, for the scrubbing operation, recycled water is used which is subjected to a treatment process and then to a preheat, by heat exchange with scrubbing water which has already served for a scrubbing operation and has already given rise to a first heat recovery by heat exchange with a heating system located near the reactor (10).

5. Process according to Claim 1, characterized in that the air taken from the atmosphere is introduced into a first chamber (156) constituting the said scrubber-evaporator stage, the said air is humidified and preheated in the said first chamber (156) by means of preheated water introduced into the said first chamber (156), the air heated and highly laden with water vapour in the first chamber (156) is used as combustion air for the thermal reactor (10), the cold water which has served for scrubbing the air in the first chamber (156) is introduced into a second chamber (157) constituting the said scrubber-condenser stage, in order to constitute the water for scrubbing the filtered hot gases, which are also introduced into the second chamber (157), to be subjected to an operation of scrubbing and of condensing the water vapour contained in the said filtered hot gases, and, on the one hand, the relatively dry combustion gases which are discharged into the atmosphere and, on the other hand, the water formed in the second chamber (157) which is itself recycled in order to be introduced into the first chamber (156) are extracted from the second chamber (157) so that the operations of scrubbing the filtered hot gases and of mass and heat exchange between the filtered hot gases and the air taken from the atmosphere are combined by the implementation of a scrubbing-evaporation operation applied in the first chamber (156) to the air taken from the atmosphere and of a scrubbing-condensation operation applied in the second chamber (157) to the filtered combustion gases.

6. Process according to any one of Claims 1 to 5, characterized in that the filtered hot gases subjected to the scrubbing operation have a temperature of about 200 to 300°C, in that the air taken from the atmosphere has a temperature of about 15 to 25°C, in that the water serving for the scrubbing operation is introduced at a temperature of about 45 to 55°C and in that the water which has served for the scrubbing operation is removed at a temperature of about 65 to 75°C, allowing heat recovery by heat exchange with a heating system located near the reactor (10).
